(19) Europäisches Patentamt
European Patent Office
Office européen des brevets

(11) **EP 4 700 845 A1**

(12) **EUROPEAN PATENT APPLICATION**

(43) Date of publication:
25.02.2026 Bulletin 2026/09

(21) Application number: 25181007.3

(22) Date of filing: 05.06.2025

(51) International Patent Classification (IPC):
$H01M\ 4/133^{(2010.01)}$     $H01M\ 4/134^{(2010.01)}$
$H01M\ 4/1393^{(2010.01)}$     $H01M\ 4/1395^{(2010.01)}$
$H01M\ 4/36^{(2006.01)}$     $H01M\ 4/38^{(2006.01)}$
$H01M\ 4/587^{(2010.01)}$     $H01M\ 10/0562^{(2010.01)}$

(52) Cooperative Patent Classification (CPC):
H01M 4/134; H01M 4/133; H01M 4/1393;
H01M 4/1395; H01M 4/366; H01M 4/386;
H01M 4/587; H01M 10/0562

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 02.08.2024 JP 2024127728
03.12.2024 JP 2024210104

(71) Applicant: TOYOTA JIDOSHA KABUSHIKI
KAISHA
Toyota-shi, Aichi-ken 471-8571 (JP)

(72) Inventor: OHTA, Ryoshi
Aichi-ken, 471-8571 (JP)

(74) Representative: Kuhnen & Wacker
Patent- und Rechtsanwaltsbüro PartG mbB
Prinz-Ludwig-Straße 40A
85354 Freising (DE)

(54) **COMPOSITE ACTIVE MATERIAL AND SOLID-STATE BATTERY**

(57) A composite active material has an electrode active material (1) and a coating layer (2). The electrode active material (1) includes an Si element. The coating layer (2) coats a surface of the electrode active material. The coating layer (2) contains a hydride solid electrolyte.

## FIG. 1A

**Description**

BACKGROUND OF THE INVENTION

1. Field of the Invention

This disclosure relates to a composite active material and a solid-state battery.

2. Description of Related Art

In recent years, development of batteries has been vigorously conducted. In the automaking industry, for example, development of batteries used for battery electric vehicles (BEVs), plug-in hybrid electric vehicles (PHEVs), or hybrid electric vehicles (HEVs) has been pursued.

For example, Japanese Unexamined Patent Application Publication No. 2023-167083 (JP 2023-167083 A) discloses, as an electrode active material used for a battery, an active material that includes Si and has voids inside primary particles.

SUMMARY OF THE INVENTION

From the viewpoint of improving battery performance, a solid-state battery with favorable initial charge-discharge efficiency is desired. This disclosure provides a composite active material that can achieve favorable initial charge-discharge efficiency in a solid-state battery.

A first aspect of this disclosure relates to a composite active material having:

an electrode active material including an Si element; and
a coating layer that coats a surface of the electrode active material and contains a hydride solid electrolyte.

The hydride solid electrolyte may contain a halide salt.

The hydride solid electrolyte may have a hexagonal crystal structure.

The BET specific surface area of the composite active material may be 15 $m^2$/g or larger and 45 $m^2$/g or smaller.

The electrode active material may contain carbon.

The electrode active material may be composed of a core part that includes the Si element and a carbon coat part that coats the core part.

The core part may contain porous carbon and silicon that is packed inside the porous carbon.

A carbon content in the composite active material may be 30 wt% or higher and 60 wt% or lower.

The thickness of the coating layer may be 0.4 nm or larger and 5.0 nm or smaller.

A second aspect of this disclosure relates to a solid-state battery having a positive electrode active material layer, a negative electrode active material layer, and a solid electrolyte layer disposed between the positive electrode active material layer and the negative electrode active material layer.

The negative electrode active material layer contains any one of the above-described composite active materials.

This disclosure offers the advantage of being able to achieve favorable initial charge-discharge efficiency in a solid-state battery.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1A is a schematic sectional view showing an example of a composite active material in this disclosure;
FIG. 1B is a schematic sectional view showing an example of a composite active material in this disclosure;
FIG. 2A is a view illustrating a crystal structure of a hydride solid electrolyte in this disclosure;
FIG. 2B is a view illustrating a crystal structure of a hydride solid electrolyte in this disclosure;
FIG. 3 is a schematic sectional view showing an example of a solid-state battery in this disclosure;
FIG. 4 is a graph summarizing a measurement result of a BET specific surface area and a result of an SEM-EDS analysis regarding Examples 1 to 3 and Comparative Example 1;
FIG. 5A is a view showing a result of an XRD measurement;
FIG. 5B is a view showing a result of an XRD measurement;

FIG. 6A is a graph showing a result of a charge-discharge test regarding Examples 1 to 3 and Comparative Example 1;
FIG. 6B is a graph showing a result of a charge-discharge test regarding Examples 1 to 3 and Comparative Example 1;
FIG. 7 is a schematic sectional view showing an example of an electrode active material (Si-C-based active material) in this disclosure; and
FIG. 8 is a graph showing a result of a charge-discharge test regarding Examples 6 to 8 and Comparative Examples 3 and 4.

## DETAILED DESCRIPTION OF EMBODIMENTS

In the following, a composite active material and a solid-state battery in this disclosure will be described in detail. Drawings to be shown in the following are schematically depicted, with the sizes and the shapes of parts exaggerated as necessary to facilitate understanding.

### A. Composite Active Material

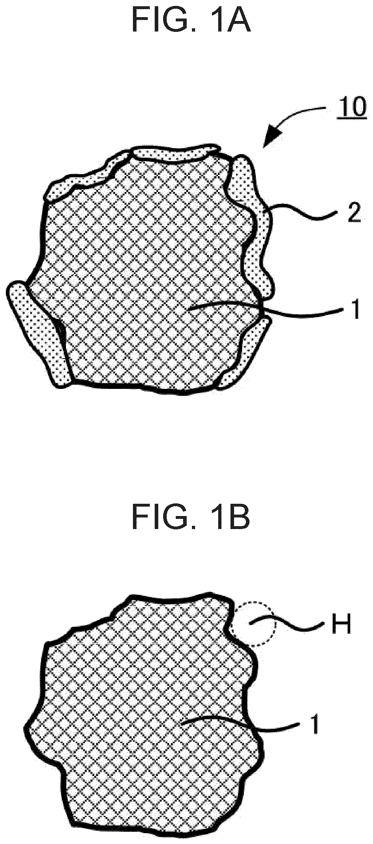

FIG. 1A is a schematic sectional view showing an example of a composite active material in this disclosure. In particular, FIG. 1A shows an example of a composite active material in which an electrode active material is a solid particle. A composite active material 10 shown in FIG. 1A has an electrode active material 1 including an Si element and a coating layer 2 coating a surface of the electrode active material 1. The coating layer 2 contains a hydride solid electrolyte. Here, in this specification, in the case where the electrode active material is a porous particle, when the electrode active material is a porous particle of Si (a particle including porous Si), the electrode active material may be referred to as "porous Si (p-Si)," and the composite active material may be referred to as "composite porous Si (composite p-Si)."
According to this disclosure, the surface of the electrode active material is coated with the coating layer containing a hydride solid electrolyte, which allows favorable initial charge-discharge efficiency in a solid-state battery.
FIG. 1B is a schematic sectional view showing an example of an electrode active material (solid particle) in this disclosure. As shown in FIG. 1B, fine dents H are normally formed in a surface of the electrode active material 1. It is presumed that when the electrode active material is a porous particle, more dents (holes) H are formed (the BET specific surface area is larger) due to voids inside. When an area of contact with a solid electrolyte (e.g., sulfide solid electrolyte) is increased by such dents H, decomposition of the solid electrolyte may accelerate. As a result, due to the decomposition of the solid electrolyte, carrier ions, such as Li ions, are consumed, which may lead to reduced initial charge-discharge efficiency in a solid-state battery.
As a countermeasure, in the composite active material in this disclosure, the surface of the electrode active material is coated with the coating layer having the hydride solid electrolyte. The coating layer functions as a barrier layer and can reduce contact between the electrode active material and the solid electrolyte inside the electrode, thereby slowing down decomposition (reductive decomposition) of the solid electrolyte. Generally, the hydride solid electrolyte has favorable stability (reduction resistance), and therefore decomposition of the hydride solid electrolyte itself is slow. Further, the hydride solid electrolyte is packed in the aforementioned fine dents and voids of the electrode active material, which can reduce the BET specific surface area of the composite active material. Thus, an increase in the area of contact between the electrode active material and the solid electrolyte inside the electrode can be avoided, and decomposition of the solid electrolyte can be further slowed down. For these reasons, consumption of Li ions due to decomposition of the solid electrolyte can be reduced, and a decrease in the initial charge-discharge efficiency of the solid-state battery can be avoided.

### 1. Electrode Active Material

The electrode active material in this disclosure includes an Si element.
The electrode active material is a so-called Si-based active material. Examples of Si-based active materials include Si as a single element, Si alloys, and Si oxides. Examples of Si alloys include Si-Al-based alloys, Si-Sn-based alloys, Si-In-based alloys, Si-Ag-based alloys, Si-Pb-based alloys, Si-Sb-based alloys, Si-Bi-based alloys, Si-Mg-based alloys, Si-Ca-based alloys, Si-Ge-based alloys, and Si-Pb-based alloys. The Si alloy may be a two-component-based alloy or may be a multicomponent alloy composed of three or more components. One example of Si oxides is SiO.
The electrode active material may be a so-called Si-C-based active material that contains an Si element and carbon (C element). The Si-C-based active material is typically a composite active material in which an Si component and a C component are independently present. In the Si-C-based active material, Si may be present at least either on a surface or in an inside of a carbon (C) carrier. When the electrode active material contains carbon, the electrode active material can achieve favorable electron conductivity. As a result, resistance during initial charge and discharge (initial resistance) can be reduced.
The electrode active material in this disclosure may be a solid particle that does not have a void inside (particularly inside a primary particle), or may be a porous particle that has a void inside (particularly inside a primary particle). When the electrode active material is a porous particle (e.g., porous Si), expansion and contraction of the active material due to charge and discharge of the battery can be reduced by the voids, which contributes to favorable cycle characteristics of the solid-state battery. The electrode active material may be a solid particle including an Si element, or may be a porous particle including an Si element. One example of solid particles including an Si element is a solid particle of Si. Examples of porous particles including an Si element include a particle including porous Si, and a particle including porous carbon and Si supported by this porous carbon. The electrode active material may have a carbon coat part, to be described later, on a surface of the solid particle or the porous particle.

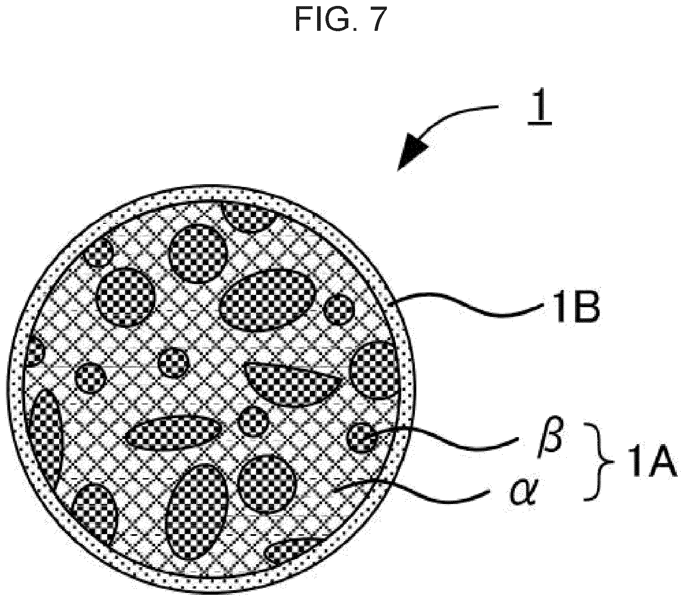

As shown in FIG. 7, the electrode active material 1 (Si-C-based active material) may have at least a core part 1A containing an Si element. On the other hand, the electrode active material 1 (Si-C-based active material) may have a carbon coat part 1B that coats the core part 1A or may not have a carbon coat part. The core part 1A may contain porous carbon $\alpha$ and silicon $\beta$ packed inside the porous carbon $\alpha$ (in pores of the porous carbon). The silicon $\beta$ may be present on a surface of the porous carbon $\alpha$ so as to coat the porous carbon $\alpha$.

While the mean size of the pores (mean pore diameter) in the porous carbon is not particularly limited, it is, for example, 100 nm or smaller and may be 80 nm or smaller, 50 nm or smaller, 30 nm or smaller, or 10 nm or smaller. On the other hand, the mean pore diameter is, for example, 0.1 nm or larger and may be 0.5 nm or larger, 1 nm or larger, or 2 nm or larger. The pore volume in the porous carbon is, for example, 0.1 cm$^3$/g or larger and may be 0.5 cm$^3$/g or larger or 1 cm$^3$/g or larger. On the other hand, the pore volume is, for example, 10 cm$^3$/g or smaller and may be 5 cm$^3$/g or smaller. The shape of the porous carbon is normally a particulate shape.

The core part in which silicon is packed in porous carbon can be produced by, for example, a vapor deposition method, such as CVD. For example, exposing porous carbon to a silane gas in a high-temperature environment can deposit silicon inside pores of the porous carbon. Conditions in CVD can be adjusted as appropriate according to the intended core part and electrode active material.

While the carbon content (the amount of porous carbon) in the core part is not particularly limited, it is, for example, 30 wt% or higher and may be 35 wt% or higher or 40 wt% or higher. On the other hand, the carbon content in the core part is, for example, 60 wt% or lower and may be 50 wt% or lower or 45 wt% or lower.

As shown in FIG. 7, the electrode active material 1 (Si-C-based active material) may have the carbon coat part 1B that coats the core part 1A. The carbon coat part may contain only a C element, or may contain unavoidable elements, such as an O element and an H element. The carbon coat part may coat part of a surface of the core part or may coat the entire surface. In the former case, the coverage of the carbon coat part is, for example, 40% or higher and may be 50% or higher. The coverage of the carbon coat part is, for example, 90% or lower and may be 80% or lower or 70% or lower.

While the thickness of the carbon coat part is not particularly limited, it is, for example, 1.0 nm or larger and 5.0 nm or smaller. While the formation method of the carbon coat part is not particularly limited, one example is a vapor deposition method, such as chemical vapor deposition (CVD).

The voidage in the porous particle is, for example, 4% or higher and may be 10% or higher. The voidage is, for example, 40% or lower and may be 20% or lower. The voidage of the electrode active material can be calculated by, for example, obtaining the electrode active material by removing the coating layer from the composite active material by water washing or the like and drying the material, and then performing cross-sectional scanning electron microscope (SEM) observation on the obtained electrode active material. For example, from an SEM image, a silicon part and a void part are distinguished from each other and binarized using image analysis software. The areas of the silicon part and the void part are obtained, and the voidage (%) is calculated from the formula below. When the electrode active material is an Si alloy, the voidage can be calculated with the area of the silicon part in the following formula being the area of a metal part:

$$\text{Voidage (\%)} = 100 \cdot (\text{area of void part}) / ((\text{area of silicon part}) + (\text{area of void part}))$$

While the mean size of the voids (mean pore diameter) in the porous particle is not particularly limited, it is, for example, 10 nm or larger and 100 nm or smaller. The pore volume is, for example, 0.10 cm$^3$/g or larger and 0.50 cm$^3$/g or smaller.

Here, the BET specific surface area of the electrode active material is, for example, 3 m$^2$/g or larger and may be 10 m$^2$/g or larger, 15 m$^2$/g or larger, larger than 20 m$^2$/g, 25 m$^2$/g or larger, 30 m$^2$/g or larger, 40 m$^2$/g or larger, 42 m$^2$/g or larger, or 45 m$^2$/g or larger. On the other hand, the BET specific surface area of the electrode active material is, for example, 100 m$^2$/g or smaller. The BET specific surface area of the electrode active material can be calculated by, for example, obtaining the electrode active material by removing the coating layer from the composite active material by water washing or the like and drying the material, and then applying the BET method using a pore distribution measurement device to the obtained electrode active material.

The electrode active material may have a diamond-type crystal phase or may have a clathrate I-type crystal phase or may have a clathrate II-type crystal phase. In the clathrate I-type or II-type crystal phase, a polyhedron (cage) including a pentagon or a hexagon is formed by a plurality of Si elements. Having a space inside in which Li ions can be enclosed, this polyhedron can reduce changes in volume due to charge and discharge.

The shape of the electrode active material is normally a particulate shape. The electrode active material may be a primary particle or may be a secondary particle that is an aggregate of primary particles. While a mean particle diameter $D_{50}$ of the electrode active material is not particularly limited, it is, for example, 1 nm or larger and may be 10 nm or larger or 100 nm or larger. On the other hand, the mean particle diameter $D_{50}$ of the electrode active material is, for example, 50 $\mu$m or smaller and may be 20 $\mu$m or smaller. $D_{50}$ refers to a cumulative 50% particle diameter in a volume-based particle diameter distribution obtained by a laser-diffraction particle size distribution measurement device. The electrode active material (porous Si) that is a porous particle can be produced by a method described in Examples to be described later.

2. Coating Layer

The coating layer coats the surface of the above-described electrode active material and contains a hydride solid electrolyte.

The hydride solid electrolyte in this disclosure has, for example, a metal cation, such as an Li ion, and a complex ion (anion) containing H. The complex ion can be represented by, for example, $[M_xH_y]^{z-}$. M is a central element in the complex ion, and examples thereof include nom-metal elements such as a B element and an N element, and metal elements such as an Al element. The symbols x, y, and z are numbers that are arbitrarily determined according to the valence of the central element. Examples of complex ions include $[BH_4]^-$, $[NH_2]^-$, $[AlH_4]^-$, and $[AlH_6]^{3-}$.

The hydride solid electrolyte may contain a halide salt (halide). Examples of halides include lithium halides such as LiF, LiCl, LiBr, and LiI. The halide salt may, together with the above-described hydride solid electrolyte, form a solid solution. When the hydride solid electrolyte and the above-described halide salt together form a solid solution, the hydride solid electrolyte is likely to maintain a hexagonal crystal structure, to be described later, even in a low-temperature environment, such as at room temperature. While the ratio of the halide is not particularly limited, it is, for example, 0.1 mol or higher and 0.5 mol or lower relative to 1 mol of the hydride solid electrolyte. That the coating layer contains a halide can be confirmed by, for example, SEM-EDX (scanning electron microscope/energy-dispersive X-ray spectroscopy; SEM-EDS). The ratio of the halogen element (the ratio of the halogen element originating from the halide in the coating layer) that can be calculated by the SEM-EDX measurement is, for example, 1.0 wt% or higher and may be 2.0 wt% or higher or 3.0 wt% or higher. On the other hand, the ratio of the halogen element is, for example, 8.0 wt% or lower and may be 7.0 wt% or lower or 6.0 wt% or lower.

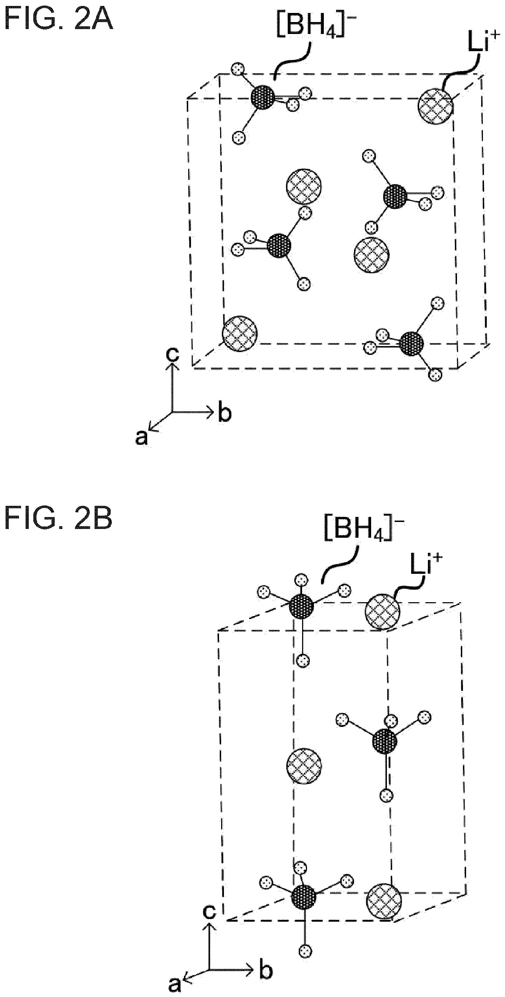

The hydride solid electrolyte in this disclosure may have a predetermined crystal structure. Here, the crystal structure of the hydride solid electrolyte will be described using FIGS. 2A and 2B. In FIGS. 2A and 2B, $LiBH_4$ is shown as the hydride solid electrolyte. In a low-temperature environment, such as at room temperature, the hydride solid electrolyte has an orthorhombic crystal structure (low-temperature phase) as shown in FIG. 2A, whereas in a high-temperature environment, for example, at 120°C or higher, it has a hexagonal crystal structure (high-temperature phase) as shown in FIG. 2B. The hydride solid electrolyte in this disclosure may have an orthorhombic crystal structure or may have a hexagonal crystal structure, and the latter is preferable. This is because favorable ion conductance can be achieved. In particular, the hydride solid electrolyte may have a hexagonal crystal structure as a main phase. "Have ... as a main phase" means that a peak belonging to the hexagonal crystal structure has highest diffraction intensity of peaks observed by X-ray diffraction measurement. The crystal structure of the hydride solid electrolyte can be confirmed by X-ray diffraction measurement (XRD measurement) using CuK$\alpha$ radiation.

Examples of peak positions belonging to an orthorhombic crystal structure in X-ray diffraction measurement using CuK$\alpha$ radiation include $2\theta = 25.63°$, $26.94°$, $27.73°$, and $29.90°$. Examples of peak positions belonging to a hexagonal crystal structure in X-ray diffraction measurement using CuK$\alpha$ radiation include $2\theta = 23.99°$, $25.58°$, $27.29°$, $35.18°$, $41.64°$, $45.88°$, and $49.58°$. Each of these peak positions may vary within a range of $\pm0.50°$, or may vary within a range of $\pm0.30°$, or may vary within a range of $\pm0.10°$.

While the ion conductance of the hydride solid electrolyte at 25°C is not particularly limited, higher ion conductance is preferable. The ion conductance is, for example, $1.0 \cdot 10^{-8}$ S/cm or higher and $1.0 \cdot 10^{-3}$ S/cm or lower.

The coating layer may contain only one type of hydride solid electrolyte or may contain two or more types thereof.

The coating layer in this disclosure may contain at least one of a conductive material and a binder. Examples of conductive materials include carbon materials, metal particles, and conductive polymers. Examples of carbon materials include particulate carbon materials such as acetylene black (AB) and ketjenblack (KB), and fibrous carbon materials such as carbon fiber, carbon nanotube (CNT), and carbon nanofiber (CNF). Examples of binders include rubber-based binders and fluoride-based binders. When the coating layer contains at least one of a conductive material and a binder, the ratio of the hydride solid electrolyte in the coating layer is, for example, 90 wt% or higher and 98 wt% or lower. On the other hand, the coating layer may not contain a conductive material and a binder.

While the thickness (mean thickness) of the coating layer is not particularly limited, it is, for example, 5.0 nm or smaller and may be 3.0 nm or smaller, 1.5 nm or smaller, or 1.0 nm or smaller. On the other hand, the thickness of the coating layer is, for example, 0.1 nm or larger and may be 0.4 nm or larger or 0.5 nm or larger.

In the composite active material in this disclosure, while the coverage by the coating layer is not particularly limited, it is, for example, 20% or higher and may be 25% or higher or 30% or higher. On the other hand, the coverage is, for example, 85% or lower and may be 80% or lower, 70% or lower, 60% or lower, 50% or lower, or 40% or lower. In particular, when the electrode active material is a porous particle, if the coverage is too high, the BET specific surface area of the composite active material may become so small that the reducing effect on changes in volume may fail to be sufficiently exhibited. The coverage can be calculated by scanning electron microscope (SEM) observation.

3. Composite Active Material

The composite active material in this disclosure is normally used for a battery. In particular, the composite active material may be used for a solid-state battery. The composite active material may be used as a positive electrode active material in a battery or may be used as a negative electrode active material, and the latter is preferable. This is because then a battery with a higher capacity can be obtained.

The shape of the composite active material is normally a particulate shape. The mean particle diameter ($D_{50}$) of the composite active material is not particularly limited as long as it is larger than the mean particle diameter ($D_{50}$) of the above-described electrode active material, and is, for example, 1 $\mu$m or larger and 50 $\mu$m or smaller.

Here, the BET specific surface area in the composite active material is normally smaller than that of the above-described electrode active material. This is because the hydride solid electrolyte is packed in grooves in the surface of and voids inside the electrode active material. The BET specific surface area of the composite active material is, for example, 50 $m^2$/g or smaller and may be 45 $m^2$/g or smaller, 40 $m^2$/g or smaller, or 30 $m^2$/g or smaller. On the other hand, the BET specific surface area of the composite active material is, for example, 3 $m^2$/g or larger and may be 10 $m^2$/g or larger, 15 $m^2$/g or larger, or 20 $m^2$/g or larger. When the BET specific surface area of the composite active material is X and the BET specific surface area of the electrode active material is Y, X/Y is, for example, 0.5 or higher and may be 0.6 or higher or 0.7 or higher. On the other hand, X/Y is, for example, 0.9 or lower and may be 0.8 or lower.

When the electrode active material is a porous particle, the mean pore diameter and the pore volume in the composite active material are normally smaller than those of the above-described electrode active material (porous particle). This is because the hydride solid electrolyte is packed in the pores of the porous particle. The mean pore diameter of the composite active material is, for example, 80 nm or smaller. The pore volume of the composite active material is, for example, 0.05 $cm^3$/g or larger and may be 0.10 $cm^3$/g or larger or 0.20 $cm^3$/g or larger. On the other hand, the pore volume is, for example, 0.40 $cm^3$/g or smaller and may be 0.30 $cm^3$/g or smaller.

The composite active material can be produced by performing a compression shearing process on a mixture containing the electrode active material and the hydride solid electrolyte and forming the above-described coating layer. The hydride solid electrolyte and the halide salt may be mixed together beforehand to produce a solid solution. One example of compression shearing processes is a method in which this mixture is fed into a container and mixed using a grinding medium, such as blades, beads, or balls, and compression shearing energy is applied to the mixture present between the grinding medium and a wall surface of the container.

B. Solid-State Battery

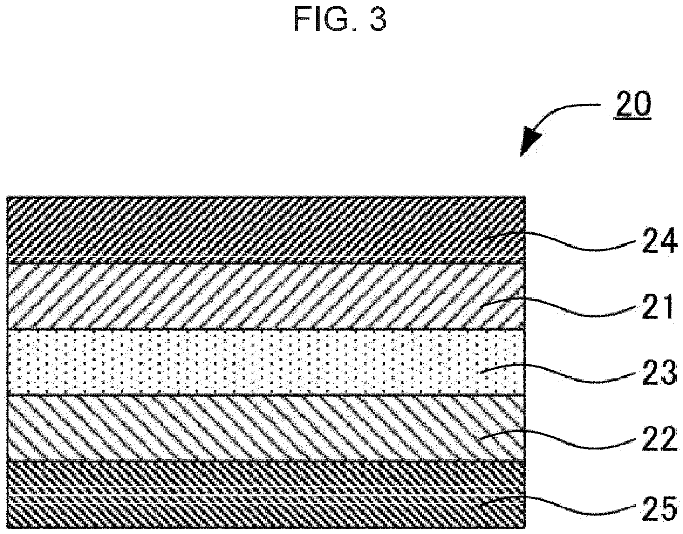

FIG. 3 is a schematic sectional view showing an example of the solid-state battery in this disclosure. A solid-state battery 20 shown in FIG. 3 has a positive electrode active material layer 21, a negative electrode active material layer 22, a solid electrolyte layer 23 disposed between the positive electrode active material layer 21 and the negative electrode active material layer 22, a positive electrode current collector 24 that collects electrons of the positive electrode active material layer 21, and a negative electrode current collector 25 that collects electrons of the negative electrode active material layer 22. In particular, in the solid-state battery 20 in this disclosure, the negative electrode active material layer 22 contains the composite active material described above in "A. Composite Active Material."

According to this disclosure, the negative electrode active material layer contains the above-described composite active material, which allows the solid-state battery to achieve favorable initial charge-discharge efficiency.

1. Negative Electrode Active Material Layer

The negative electrode active material layer contains the above-described composite active material. The negative electrode active material layer may contain at least one of a conductive material, a binder, and an electrolyte as necessary.

For the conductive material and the binder, the same contents that have been described in "A. Composite Active Material" apply. One example of electrolytes is a solid electrolyte. Examples of solid electrolytes include inorganic solid electrolytes such as sulfide solid electrolytes, oxide solid electrolytes, nitride solid electrolytes, halide solid electrolytes, and complex hydrides. Among them, particularly sulfide solid electrolytes are preferable. This is because they have high ion conductivity. A sulfide solid electrolyte normally contains sulfur (S) as a main component of an anion element. An oxide solid electrolyte, a nitride solid electrolyte, and a halide solid electrolyte normally contain oxygen (O), nitrogen (N), and halogen (X), respectively, as a main component of an anion element.

While the thickness of the negative electrode active material layer is not particularly limited, it is, for example, 0.1 $\mu$m or larger and 1000 $\mu$m or smaller. The negative electrode active material layer can be formed by, for example, a coating method. In the coating method, the negative electrode active material layer can be formed by applying a slurry containing at least the above-described composite active material to the negative electrode current collector and drying this slurry.

2. Positive Electrode Active Material Layer

The positive electrode active material layer contains at least a positive electrode active material. The positive electrode active material layer may contain at least one of a conductive material, a binder, and an electrolyte as necessary. For the conductive material, the binder, and the electrolyte, the same contents that have been described in "1. Negative Electrode Active Material Layer" apply.

Examples of positive electrode active materials include oxide active materials. Examples of oxide active materials include bedded salt-type active materials such as $LiCoO_2$, $LiNi_{0.33}Co_{0.33}Mn_{0.33}O_2$ and $LiNi_{0.8}Co_{0.15}Al_{0.05}O_2$, spinel-type active materials such as $LiMn_2O_4$ and $Li_4Ti_5O_{12}$, and olivine-type active materials such as $LiFePO_4$. The shape of the positive electrode active material is, for example, a particulate shape.

The positive electrode active material layer can be formed by the above-described coating method. The thickness of the positive electrode active material layer is, for example, 0.1 $\mu$m or larger and 1000 $\mu$m or smaller.

3. Solid Electrolyte Layer

The solid electrolyte layer is a layer disposed between the above-described positive electrode active material layer and the above-described negative electrode active material layer, and contains at least a solid electrolyte. The solid electrolyte layer may contain a binder as necessary. For the binder, the same contents that have been described in "1. Negative Electrode Active Material Layer" apply.

Examples of solid electrolytes include the inorganic solid electrolytes that have been described in "1. Negative Electrode Active Material Layer." Other examples of solid electrolytes include organic solid electrolytes such as polymer electrolytes and gel electrolytes. The solid electrolyte layer may contain a liquid electrolyte (electrolytic solution) as an electrolyte. The thickness of the solid electrolyte layer is, for example, 1 $\mu$m or larger and 500 $\mu$m or smaller.

4. Other Components

The solid-state battery in this disclosure normally has a positive electrode current collector that collects a current of the positive electrode active material layer and a negative electrode current collector that collects a current of the negative electrode active material layer. Examples of the material of the positive electrode current collector include SUS, aluminum, nickel, iron, titanium, and carbon. On the other hand, examples of the material of the negative electrode current collector include SUS, copper, nickel, and carbon.

The solid-state battery in this disclosure may further have a restraining jig that applies a restraining pressure to the positive electrode active material layer, the solid electrolyte layer, and the negative electrode active material layer along a thickness direction. The restraining pressure is, for example, 0.1 MPa or higher and may be 1 MPa or higher or 5 MPa or higher. On the other hand, the restraining pressure is, for example, 100 MPa or lower and may be 50 MPa or lower or 20 MPa or lower.

5. Solid-State Battery

The type of the solid-state battery in this disclosure is typically a lithium-ion battery. The solid-state battery in this disclosure may be a semi-solid-state battery or may be an all-solid-state battery. The solid-state battery in this disclosure may be a primary battery or may be a secondary battery, and particularly being a secondary battery is preferable. This is because a secondary battery is repeatedly chargeable and dischargeable, which makes it useful as an on-board battery, for example.

Examples of applications of the solid-state battery include power sources of vehicles such as hybrid electric vehicles (HEVs), plug-in hybrid electric vehicles (PHEVs), battery electric vehicles (BEVs), gasoline vehicles, and diesel vehicles. In particular, it is preferable that the solid-state battery be used as a driving power source of a hybrid electric vehicle (HEV), a plug-in hybrid electric vehicle (PHEV), or a battery electric vehicle (BEV). The solid-state battery may be used as a power source of a mobile body other than vehicles (e.g., a train, a ship, or an airplane), or may be used as a power source of an electrical product, such as an information processing device.

This disclosure is not limited to the above-described embodiment. The above-described embodiment represents an example, and any embodiments that have substantially the same configuration as the technical idea described in the claims of this disclosure and offer similar operational advantages are included in the technical scope of this disclosure.

Example 1

Production of Composite Active Material

First, an electrode active material (porous Si particles: p-Si) that included an Si element and had voids inside were produced as follows:

Si particles (mean particle diameter: 0.5 $\mu$m) and Na particles were mixed together to a molar ratio of 1 : 1 and the mixture was heated at 700°C to synthesize NaSi (zintl compound). Thereafter, the zintl compound was heated at 340°C to remove Na. Thereafter, additional heating was performed at 430°C to further remove Na. Thus, an electrode active material was produced.

Next, the aforementioned electrode active material was coated with a coating layer as follows:

$LiBH_4$ and LiI were weighed to a molar ratio of 3 : 1 and mixed together using an agate mortar for five minutes. Tetrahydrofuran (THF) was added to the obtained mixture to obtain a solution. The THF was added in such an amount that the weight thereof was five times that of porous Si particles to be fed in. These porous Si particles were added to the solution and mixed on a hot plate at 100°C. After the THF volatilized sufficiently, the resulting powder was collected and this powder was further vacuum-dried at 120°C for 12 hours. Thus, a composite active material was obtained in which a coating layer containing a hydride solid electrolyte ($3LiBH_4$-LiI) containing a halide salt was formed on a surface of the porous Si. Here, the ratio of the hydride solid electrolyte to the total of the hydride solid electrolyte and the porous Si was 1.7 wt%. The ratio of the hydride solid electrolyte was a ratio assuming that a coating layer of the same thickness (target thickness: 0.1 nm) was to be formed relative to the areas of all particles based on the value of the BET specific surface area of the electrode active material to be described later.

Production of Battery for Evaluation

The aforementioned composite active material, a sulfide solid electrolyte (LiI-$Li_2S$-$P_2S_5$; sulfide glass solid electrolyte), a conductive material (carbon nanotube), a binder (styrene-butadiene rubber: SBR), and a dispersion medium (di-isobutyl ketone) were added and mixed together to obtain a negative electrode slurry. In the negative electrode slurry, the ratio of the composite active material, the sulfide solid electrolyte, the binder, and the conductive material was 51.2 : 41.9 : 6.6 : 0.3 by volume. The negative electrode slurry was applied to a negative electrode current collector (Cu foil) and dried to obtain a negative electrode having a negative electrode active material layer and a negative electrode current collector.

A positive electrode active material ($LiNi_{0.8}Co_{0.15}Al_{0.05}O_2$), a sulfide solid electrolyte (LiI-$Li_2S$-$P_2S_5$; crystalline sulfide solid electrolyte), a binder (styrene-butadiene rubber: SBR), a conductive material (vapor-grown carbon fiber: VGCF), and a dispersion medium (1, 2, 3, 4-tetrahydronaphthalene) were mixed together to obtain a positive electrode slurry. In the positive electrode slurry, the ratio of the composite active material, the sulfide solid electrolyte, the binder, and the conductive material was 59.7 : 32.1 : 5.4 : 2.8 by volume. The positive electrode slurry was applied to a positive electrode current collector (Al foil) and dried to obtain a positive electrode having a positive electrode active material layer and a positive electrode current collector. The size of the positive electrode was adjusted so as to be smaller than the size of the negative electrode.

A sulfide solid electrolyte (LiI-$Li_2S$-$P_2S_5$; sulfide glass solid electrolyte), a binder (acrylate-butadiene rubber: ABR), and a dispersion medium (n-heptane, butyl butyrate) were mixed together to obtain a slurry. The slurry was applied to a base material (Al foil) and dried to obtain a transfer member having a solid electrolyte layer. The size of the solid electrolyte layer was the same as that of the negative electrode.

The negative electrode and the transfer member were placed on top of each other such that the negative electrode active material layer and the solid electrolyte layer faced each other, and were subjected to pressing. Thereafter, the base material was peeled off to transfer the solid electrolyte layer. Further, the positive electrode was placed such that the solid electrolyte layer and the positive electrode active material layer faced each other, and the negative electrode, the solid electrolyte layer, and the positive electrode (a solid-state battery) were subjected to pressing. Then, terminals were mounted and the terminals were restrained to the solid-state battery under a pressure of 20 MPa relative to the areas of the electrodes. Thus, a battery (all-solid-state battery) for evaluation was obtained.

Examples 2 and 3

Composite active materials and batteries for evaluation were produced in the same manner as in Example 1, except that the ratio of the hydride solid electrolyte was changed as shown in Table 1. The ratio of the hydride solid electrolyte was set to ratios such that the respective target thicknesses of the coating layers became 0.4 nm and 1.0 nm.

Comparative Example 1

A battery for evaluation was produced in the same manner as in Example 1, except that the above-described porous Si particles were used as the negative electrode active material.

Examples 4 and 5

Composite active materials and batteries for evaluation were produced in the same manner as in Example 1, except that, instead of porous Si particles, Si particles that had a diamond-type crystal phase and were solid (the Si particles described in Example 1) were used, and that the ratio of the hydride solid electrolyte was adjusted such that the respective target thicknesses of the coating layers became 0.4 nm and 1.0 nm. Here, Examples 4 and 5 are equal to Examples 2 and 3, respectively, in the target thickness of the coating layer, but are different from Examples 2 and 3 in the ratio of the hydride solid electrolyte as shown in Table 1. This is because the electrode active materials of Examples 4 and 5 are solid particles and the BET specific surface areas thereof are smaller than those of the electrode active materials of Examples 2 and 3.

Comparative Example 2

A battery for evaluation was produced in the same manner as in Example 1, except that solid Si particles were used as the negative electrode active material.

Evaluation 1

The following evaluations were performed on the negative electrode active materials produced in Examples 1 to 5 and Comparative Examples 1 and 2.

Measurement of BET Specific Surface Area

For the negative electrode active materials produced in Example 1 to Example 5 and Comparative Examples 1 and 2, the BET specific surface area was calculated by the BET method using a pore distribution measurement device. The result is shown in Table 1. In Examples 1 to 3, the same p-Si as in Comparative Example 1 was coated, and therefore the specific surface area of Comparative Example 1 can be regarded as the specific surface area of the electrode active material in the negative electrode active materials (composite active materials) of Examples 1 to 3. Similarly, the specific surface area of Comparative Example 2 can be regarded as the specific surface area of the electrode active material in the negative electrode active materials (composite active materials) of Examples 4 and 5.

SEM-EDS Analysis

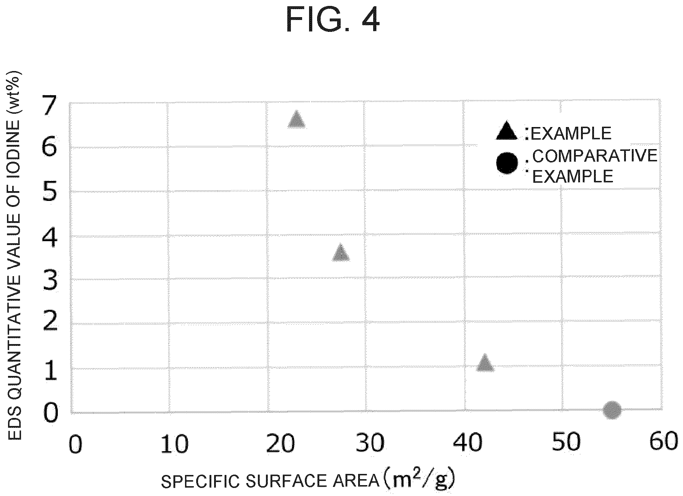

For the composite active materials produced in Examples 1 to 5, an SEM-EDS analysis was performed to measure the ratio of the halogen element (I element) in the composite active material. The result is shown in Table 1. Relationships between the BET specific surface area and the ratio of the I element in Examples 1 to 3 and Comparative Example 1 are summarized in FIG. 4.

Table 1

| | $3LiBH_4$-LiI (wt%) | BET specific surface area ($m^2$/g) | Ratio of I element (wt%) |
|---|---|---|---|
| Comparative Example 1 | - | 55.0 | - |
| Example 1 | 1.7 | 42.1 | 1.1 |
| Example 2 | 7.0 | 27.5 | 3.6 |
| Example 3 | 15.0 | 23.1 | 6.6 |

(continued)

|  | 3LiBH$_4$-LiI (wt%) | BET specific surface area (m$^2$/g) | Ratio of I element (wt%) |
|---|---|---|---|
| Comparative Example 2 | - | 25.8 | - |
| Example 4 | 2.1 | 18.4 | 2.5 |
| Example 5 | 4.8 | 16.5 | 3.3 |

As shown in Table 1 and FIG. 4, it was confirmed that increasing the ratio of the hydride solid electrolyte led to a higher ratio of the I element. In all Examples, the BET specific surface area was smaller than in Comparative Examples (the electrode active materials that do not have a coating layer). While this is not shown in the tables, for Examples 1 to 3 and Comparative Example 1, the pore volume of each negative electrode active material was measured by a pore distribution measurement device as follows: about 0.3 cm$^3$/g in Comparative Example 1; about 0.25 cm$^3$/g in Example 1; about 0.18 cm$^3$/g in Example 2; and about 0.16 cm$^3$/g in Example 3. Thus, it is inferred that the specific surface area and the pore volume were reduced as the voids in the porous particles were packed with the hydride solid electrolyte.

XRD Analysis

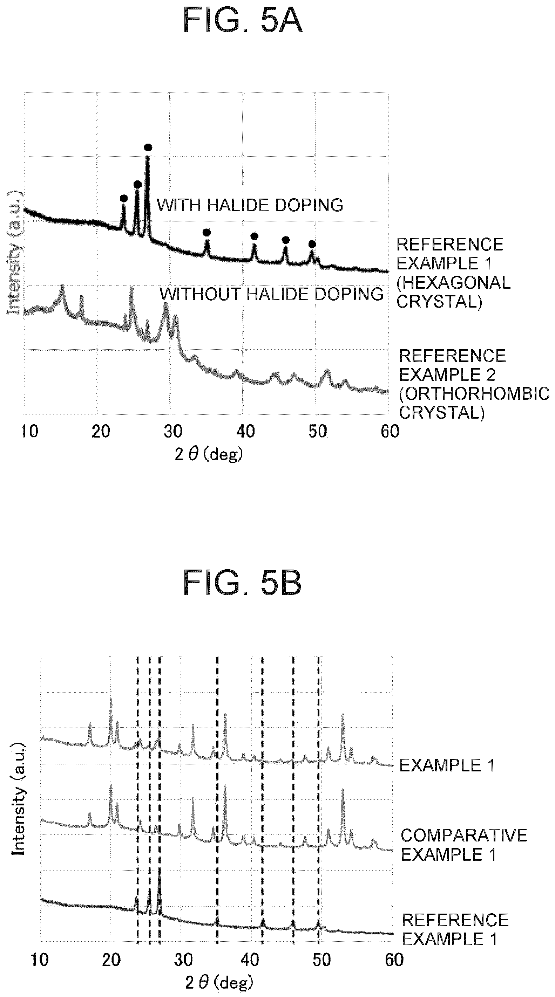

As Reference Example 1, a hydride solid electrolyte having a hexagonal crystal-type crystal structure was produced. The hydride solid electrolyte having a hexagonal crystal-type crystal structure was produced by mixing together LiBH$_4$ and LiI, weighed to a molar ratio of 3 : 1, in an agate mortar, and then subjecting the mixture to a heat treatment (in a vacuum environment, at 120°C, for 12 hours). As Reference Example 2, a hydride solid electrolyte having an orthorhombic crystal structure was produced. The hydride solid electrolyte having an orthorhombic crystal structure was produced in the same manner as in Reference Example 1, except that it was not doped with lithium halide (LiI). The result of an XRD measurement of Reference Example 1 and Reference Example 2 is shown in FIG. 5A. In FIG. 5A, peaks that are characteristics of a hexagonal crystal structure are marked. The result of an XRD measurement of the negative electrode active materials produced in Reference Example 1, Example 1, and Comparative Example 1 is shown in FIG. 5B.

As shown in FIG. 5A, in Reference Example 1, a peak characteristic of a hexagonal crystal structure was recognized as a main peak. On the other hand, as for the hydride solid electrolyte of Reference Example 2, while a peak that seemed to be an impurity was also recognized, a peak characteristic of a hexagonal crystal was not recognized. Thus, it was confirmed that doping of halide (lithium halide) helped maintain a hexagonal crystal structure. As shown in FIG. 5B, in Comparative Example 1 (porous Si), a peak of a hexagonal crystal was not recognized, whereas in Example 1 (composite porous Si), the aforementioned peaks of a hexagonal crystal were recognized. In Example 1, while a peak of a hexagonal crystal is hard to recognize in the drawing due to the relationship with other peak intensities, it was confirmed by numerical values that there were peaks of a hexagonal crystal.

Evaluation 2

The following evaluation was performed on the all-solid-state batteries produced in Example 1 to Example 5 and Comparative Examples 1 and 2.

Calculation of Initial Charge-Discharge Efficiency

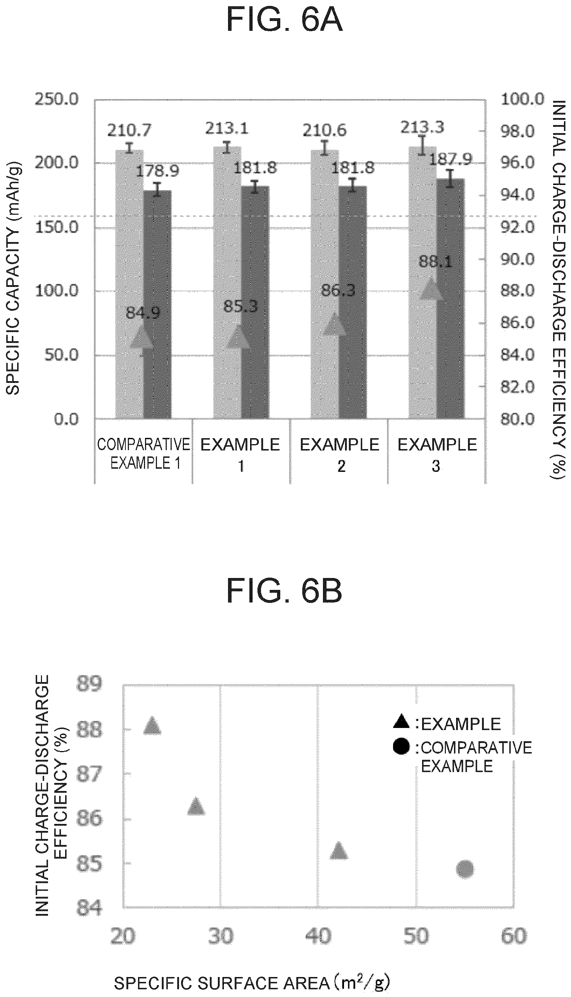

The batteries for evaluation produced in Examples 1 to 5 and Comparative Examples 1 and 2 were restrained under a pressure of 20 MPa. The restrained batteries for evaluation were activated by performing CCCV charge and CCCV discharge. The conditions of the CCCV charge was 1/10 C, 1/100 C, and an upper limit voltage of 4.05 V. The conditions of the CCCV discharge were 1/3 C, 1/100 C, and a lower limit voltage of 2.5 V. Initial charge (CCCV charge) of each activated battery for evaluation was performed and the initial charge capacity (specific capacity) was measured. Thereafter, initial discharge (CCCV discharge) was performed and the initial discharge capacity (specific capacity) was measured. From the obtained initial charge capacity and the initial discharge capacity, the initial charge-discharge efficiency ((initial discharge capacity / initial charge capacity) · 100) was calculated. The conditions of the initial charge were 1/3 C, 1/100 C, and an upper limit voltage of 4.05 V, and the conditions of the initial discharge were 1/3 C, 1/100 C, and a lower limit voltage of 2.5 V. The charge-discharge efficiency was calculated as a mean value of n = 4. The result is shown in Table 2 along with the result of the specific surface area. The result of Examples 1 to 3 and Comparative Example 1 are also shown in FIGS. 6A and 6B.

Table 2

| | BET specific surface area (m²/g) | Initial charge-discharge efficiency (%) |
|---|---|---|
| Comparative Example 1 | 55.0 | 84.9 |
| Example 1 | 42.1 | 85.3 |
| Example 2 | 27.5 | 86.3 |
| Example 3 | 23.1 | 88.1 |
| Comparative Example 2 | 25.8 | 88.2 |
| Example 4 | 18.4 | 88.8 |
| Example 5 | 16.5 | 89.1 |

As shown in Table 2, both when the electrode active material was porous particles (Examples 1 to 3 and Comparative Example 1) and when it was solid particles (Examples 4 and 5 and Comparative Example 2), forming the coating layer led to favorable initial charge-discharge efficiency. As shown in FIG. 6A, as for the initial charge capacity (the left side in the bar graph), no significant variation was found among Comparative Example 1 and Examples 1 to 3, whereas the initial discharge capacity (the right side in the bar graph) was markedly higher in Examples than in Comparative Example. This suggests that consumption of Li ions due to decomposition of the solid electrolyte was reduced in Examples. Further, as shown in Table 2 and FIG. 6B, the smaller the specific surface area is, the higher the initial charge-discharge efficiency is, suggesting that the area of contact between the electrode active material and the solid electrolyte could be reduced to slow down decomposition of the solid electrolyte.

Example 6

Silicon (Si) was packed inside porous carbon constituting a base material by the CVD method to produce a core part. Thereafter, a carbon coat part was formed on the surface of the core part by the CVD method. Thus, an electrode active material having the core part and the carbon coat part was produced. Specifically, the porous carbon was let stand inside a tubular furnace and the temperature was raised to 500°C by an Ar flow, and CVD was performed for 30 minutes while silane ($SiH_4$) was passed. Before the temperature was raised, the inside of the tubular furnace was substituted with an Ar gas. Thus, Si was packed inside the porous carbon. Thereafter, in the same reaction container, the temperature was raised to 650°C by an Ar flow in the same manner, and CVD was performed for 20 minutes while acetylene ($C_2H_2$) and Ar were passed. Thus, a carbon coat part was formed on the surface of the core part. Here, to produce an electrode active material by the CVD method, an $N_2$ gas, instead of an Ar gas, can also be used as an inert gas. A coating layer was formed on the obtained electrode active material by the same method as in Example 1 to obtain a composite active material. The ratio of the hydride solid electrolyte was set to such a ratio that the target thickness of the coating layer became 0.4 nm. A battery (all-solid-state battery) for evaluation was produced in the same manner as in Example 1, except that the aforementioned composite active material was used. It is presumed that, since the produced electrode active material has silicon packed inside the porous carbon, the BET specific surface area thereof is smaller than that of Comparative Example 1 of which the electrode active material is porous Si particles.

Examples 7 and 8

Batteries for evaluation were produced in the same manner as in Example 6, except that the composite active materials were produced with the ratio of the hydride solid electrolyte changed such that the target thicknesses of the coating layers became 1.0 nm (Example 7) and 5.0 nm (Example 8).

Comparative Example 3

A battery for evaluation was produced in the same manner as in Example 6, except that solid Si particles that did not have a coating layer were used as the negative electrode active material.

Comparative Example 4

An electrode active material having a core part and a carbon coat part was produced in the same manner as in Example 6. A battery for evaluation was produced in the same manner as in Example 6, except that this electrode active material was used as the negative electrode active material.

Evaluation 3

Measurement of Carbon Content

For the negative electrode active materials produced in Examples 6 to 8 and Comparative Examples 3 and 4, carbon contents were measured by an XPS analysis. The result is shown in Table 3. As shown in Table 3, presence of carbon was recognized also in Comparative Example 3 in which a carbon coat part was not formed. This carbon is inferred to originate from a functional group that is unavoidably included.

Calculation of Initial Resistance Value

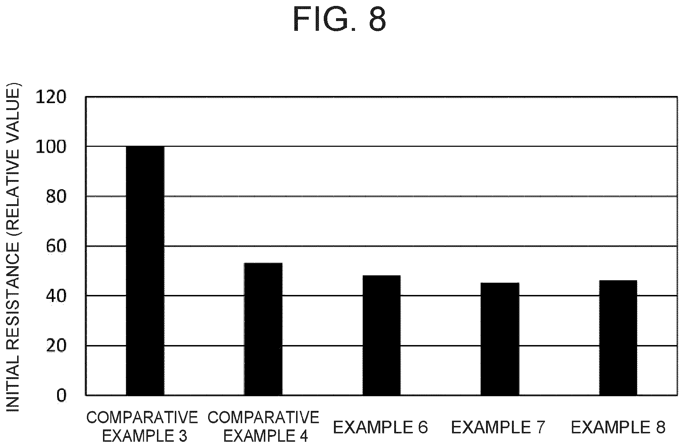

For the all-solid-state batteries produced in Examples 6 to 8 and Comparative Examples 3 and 4, the initial resistance values were calculated as follows: The batteries for evaluation were activated under the same conditions as in Evaluation 2 described above. Thereafter, CCCV charge (1/10 C, 1/100 C, upper limit voltage 4.05 V) was performed up to an SOC of 50%. Then, a voltage change ($\Delta V$) when a current at a 6 C rate was passed was acquired, and a resistance value (initial resistance value) was calculated from Ohm's law. An evaluation was relatively made with the resistance value of Comparative Example 3 as 100. The result is shown in Table 3 and FIG. 8.

Table 3

|  | Electrode active material | Carbon content (wt%) | Initial resistance (relative value) |
|---|---|---|---|
| Comparative Example 3 | Si | 0.19 | 100 |
| Comparative Example 4 | Si-C | 49.3 | 53 |
| Example 6 | Si-C | 47.8 | 48 |
| Example 7 | Si-C | 46.7 | 45 |
| Example 8 | Si-C | 44.3 | 46 |

As shown in Table 3 and FIG. 8, it was demonstrated that using an Si-C-based composite active material (Si-C) as the electrode active material led to reduced initial resistance. It was confirmed that coating the surface of the Si-C with a coating layer containing a hydride solid electrolyte led to further reduced initial resistance. This result, together with the above-described results of Table 1 and Table 2, demonstrated that coating the surface of the Si-C-based composite active material with a coating layer containing a hydride solid electrolyte made it possible to obtain a solid-state battery with favorable charge-discharge efficiency as well as reduced initial resistance.

**Claims**

1.  A composite active material comprising:

    an electrode active material (1) including an Si element; and
    a coating layer (2) that coats a surface of the electrode active material (1) and contains a hydride solid electrolyte.

2.  The composite active material according to claim 1, wherein the hydride solid electrolyte contains a halide salt.

3.  The composite active material according to claim 1, wherein the hydride solid electrolyte has a hexagonal crystal structure.

4.  The composite active material according to claim 1, wherein a BET specific surface area of the composite active material is 15 m$^2$/g or larger and 45 m$^2$/g or smaller.

5.  The composite active material according to claim 1, wherein the electrode active material (1) contains carbon.

6.  The composite active material according to claim 5, wherein the electrode active material (1) is composed of a core part that includes the Si element and a carbon coat part that coats the core part.

7.  The composite active material according to claim 6, wherein the core part contains porous carbon and silicon that is packed inside the porous carbon.

8. The composite active material according to claim 5, wherein a carbon content in the composite active material is 30 wt% or higher and 60 wt% or lower.

9. The composite active material according to claim 1, wherein a thickness of the coating layer (2) is 0.4 nm or larger and 5.0 nm or smaller.

10. A solid-state battery (20) comprising a positive electrode active material layer (21), a negative electrode active material layer (22), and a solid electrolyte layer (23) disposed between the positive electrode active material layer (21) and the negative electrode active material layer (22), wherein the negative electrode active material layer (22) contains the composite active material according to any one of claims 1 to 9.

# FIG. 1A

# FIG. 1B

FIG. 2A

FIG. 2B

FIG. 3

# FIG. 4

# FIG. 5A

# FIG. 5B

# FIG. 6A

# FIG. 6B

FIG. 7

# FIG. 8

Europäisches
Patentamt

European
Patent Office

Office européen
des brevets

## EUROPEAN SEARCH REPORT

Application Number

EP 25 18 1007

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2016 018679 A (MITSUBISHI GAS CHEMICAL CO; TOHOKU TECHNO ARCH CO LTD) 1 February 2016 (2016-02-01) * paragraphs [0059] - [0061] * * claim 8 * * paragraphs [0029] - [0030] * ----- | 1-10 | INV. H01M4/133 H01M4/134 H01M4/1393 H01M4/1395 H01M4/36 H01M4/38 H01M4/587 |
| A | US 2024/047735 A1 (LI XIMENG [JP] ET AL) 8 February 2024 (2024-02-08) * the whole document * ----- | 1-10 | ADD. H01M10/0562 |
| A | US 10 147 937 B2 (MITSUBISHI GAS CHEMICAL CO [JP]; TOHOKU TECHNO ARCH CO LTD [JP]) 4 December 2018 (2018-12-04) * the whole document * ----- | 1-10 | |
| A | JP 2017 188301 A (MITSUBISHI GAS CHEMICAL CO; TOHOKU TECHNO ARCH CO LTD) 12 October 2017 (2017-10-12) * the whole document * ----- | 1-10 | |

TECHNICAL FIELDS
SEARCHED (IPC)

H01M

The present search report has been drawn up for all claims

| Place of search | Date of completion of the search | Examiner |
|---|---|---|
| The Hague | 13 January 2026 | Helgadóttir, Inga |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................................

& : member of the same patent family, corresponding
document

EPO FORM 1503 03.82 (P4C01)

## ANNEX TO THE EUROPEAN SEARCH REPORT
## ON EUROPEAN PATENT APPLICATION NO.

EP 25 18 1007

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2026

| Patent document cited in search report | | Publication date | Patent family member(s) | | Publication date |
|---|---|---|---|---|---|
| JP 2016018679 | A | 01-02-2016 | JP | 6431707 B2 | 28-11-2018 |
| | | | JP | 2016018679 A | 01-02-2016 |
| US 2024047735 | A1 | 08-02-2024 | CN | 117525553 A | 06-02-2024 |
| | | | JP | 7673710 B2 | 09-05-2025 |
| | | | JP | 2024021430 A | 16-02-2024 |
| | | | US | 2024047735 A1 | 08-02-2024 |
| US 10147937 | B2 | 04-12-2018 | BR | 112016004291 A2 | 06-06-2017 |
| | | | CA | 2921210 A1 | 05-03-2015 |
| | | | CN | 105580185 A | 11-05-2016 |
| | | | EP | 3043412 A1 | 13-07-2016 |
| | | | HU | E050631 T2 | 28-12-2020 |
| | | | JP | 6868959 B2 | 12-05-2021 |
| | | | JP | 2020064864 A | 23-04-2020 |
| | | | JP | WO2015030053 A1 | 02-03-2017 |
| | | | KR | 20160048894 A | 04-05-2016 |
| | | | PL | 3043412 T3 | 08-02-2021 |
| | | | RU | 2016103788 A | 09-10-2017 |
| | | | TW | 201530846 A | 01-08-2015 |
| | | | US | 2016204466 A1 | 14-07-2016 |
| | | | WO | 2015030053 A1 | 05-03-2015 |
| JP 2017188301 | A | 12-10-2017 | JP | 6716324 B2 | 01-07-2020 |
| | | | JP | 2017188301 A | 12-10-2017 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023167083 A